# FASCICULE DE BREVET EUROPEEN

(11) **EP 0 473 504 B1**
(45) Date de publication et mention de la délivrance du brevet: **15.11.1995**
(21) Numéro de dépôt: 91402311.4
(22) Date de dépôt: 26.08.1991
(51) Int. Cl.: B29C 67/24, B29C 45/17

(54) **Procédé de fabrication de corps creux moulés en forme**
Verfahren zum Herstellen eines Hohlkörpers
Method of manufacturing for hollow moulded object

(30) Priorité: 28.08.1990 FR 9010714
(43) Date de publication de la demande: 04.03.1992
(73) Titulaire: HUTCHINSON, F-75008 Paris (FR)
(72) Inventeur: Nivert, Chantal, F-86140 Lencloitre (FR)
(74) Mandataire: Ramey, Daniel

(56) Documents cités:
- EP-A- 0 271 146
- EP-A- 0 294 768
- EP-A- 0 322 285
- DE-A- 3 838 921
- FR-A- 2 358 250
- US-A- 4 534 003

## Description

L'invention concerne un procédé de fabrication de corps creux moulés en forme, par exemple de corps tubulaires non rectilignes, par injection de matière et d'un gaz sous pression dans un volume de moulage.

On connaît déjà des procédés d'injection-soufflage qui sont utilisés pour la fabrication de corps creux en matière thermoplastique, et qui consistent à réaliser tout d'abord une pré-forme par injection de la matière plastique dans un moule approprié, puis à placer cette pré-forme dans un autre moule à la forme du produit à obtenir, et à injecter dans la pré-forme un gaz sous pression, qui va l'expanser et l'appliquer sur les parois de cet autre moule.

On connaît également des procédés d'extrusion ou d'extrusion-soufflage qui permettent d'obtenir des pièces tubulaires rectilignes. Ces techniques peuvent être utilisées pour la fabrication de joints tubulaires, de conduites ou de tubes utilisables notamment dans le domaine automobile. Cependant, ces joints tubulaires, tubes ou conduits doivent souvent être coudés pour être mis en place, ce qui se traduit par leur écrasement ou aplatissement au niveau des coudes.

On connaît enfin un procédé de moulage de pièces en matière thermoplastique, par injection d'une quantité déterminée de matière thermoplastique dans un moule, suivie immédiatement d'une injection de gaz sous pression dans cette matière thermoplastique, ce qui a pour effet de l'expanser et de l'appliquer sur les parois du moule. Un réglage correct de la température de moulage, de la quantité de matière injectée et de la pression du gaz permet d'obtenir une bonne répartition de la matière sur les parois du moule grâce aux propriétés des matières thermoplastiques.

Par le document FR-A-2 358 250, on connaît un procédé de moulage de corps creux comportant une pluralité d'âmes internes à disposition aléatoire, le moulage étant réalisé par injection d'un fluide de mise en pression dans un moule contenant une matière plastique, celle-ci pouvant être du type thermodurcissable dans la mesure où elle présente des caractéristiques thermoplastiques pendant un certain temps avant la réticulation provoquant le durcissement de la matière. Toutefois, ce procédé connu est limité à la fabrication de corps creux à âmes internes et ne permet pas la fabrication de corps tubulaires tels que des conduits, qui doivent avoir une section interne dépourvue d'âmes internes.

La présente invention a pour but de perfectionner ces procédés connus en vue de la fabrication de corps creux moulés en forme et réalisés en matériaux thermodurcissables, notamment de corps tubulaires.

L'invention a également pour but de combiner cette technique particulière de moulage et le procédé R.I.M. (réaction-injection-moulage), en conservant les avantages inhérents à ces deux procédés.

L'invention propose, à cet effet, un procédé de fabrication de corps creux moulés en forme, par exemple de corps tubulaires non rectilignes, par injection de matière plastique et d'un gaz sous pression dans un volume de moulage, caractérisé en ce qu'il consiste à utiliser une matière thermodurcissable, à injecter une quantité prédéterminée de cette matière dans le volume de moulage par un procédé R.I.M., à injecter ensuite dans ce volume de moulage un gaz sous une pression déterminée, et à contrôler la cinétique de polycondensation de la matière injectée pour que cette matière déplacée par le gaz recouvre de façon continue les surfaces délimitant le volume de moulage avant que sa polycondensation ne s'y oppose, la cinétique de polycondensation étant contrôlée par détermination de la température et/ou de la pression de moulage, et/ou par addition à la matière injectée de catalyseurs, de durcisseurs, d'accélérateurs ou d'inhibiteurs.

L'invention présente de nombreux avantages par rapport à la technique connue :
- le procédé R.I.M. permet d'injecter la matière dans le volume de moulage sous une pression relativement faible (de quelques bars), alors que les techniques classiques d'injection des matières thermoplastiques nécessitent souvent des pressions d'injections de plusieurs centaines de bars,
- le contrôle de la cinétique de la polycondensation de la matière thermodurcissable permet la répartition de cette matière dans le volume de moulage et la réalisation du corps creux ou tubulaire souhaité,
- les corps creux ou tubulaires sont moulés en matière thermodurcissable et mis en forme dans une seule opération.

Les réactions de polycondensation des matières thermodurcissables sont en général rapides, de sorte que l'invention prévoit de les ralentir ou de les bloquer pendant le temps nécessaire à la répartition de la matière injectée dans le volume de moulage. La polycondensation de la matière est en effet irréversible et se traduit par un durcissement s'opposant à cette répartition. Cette difficulté n'existe pas dans le cas des thermoplastiques, qu'il suffit de chauffer pour les voir revenir à l'état plastique.

Selon une autre caractéristique de l'invention, le procédé consiste à déposer au préalable des moyens de renfort et/ou des inserts dans le volume de moulage.

Ce procédé consiste également à former au préalable dans le volume de moulage une épaisseur de matière de revêtement, ayant un bon aspect de surface et qui est destinée à recouvrir la surface extérieure ou visible du corps creux précité.

On peut ainsi réaliser par exemple des pièces de carrosserie ayant un aspect de classe A.

Le procédé selon l'invention peut notamment être appliqué à la fabrication de joints tubulaires, de tubes ou de conduits mis en forme, utilisables en particulier dans le domaine automobile, ainsi qu'à la fabrication de pièces creuses d'équipement ou de carrosserie automobile.

Dans la description qui suit, faite à titre d'exemple, on se réfère aux dessins annexés dans lesquels:
la figure 1 représente schématiquement les diverses étapes du procédé selon l'invention ;
la figure 2 est un exemple d'une pièce moulée en forme selon l'invention.

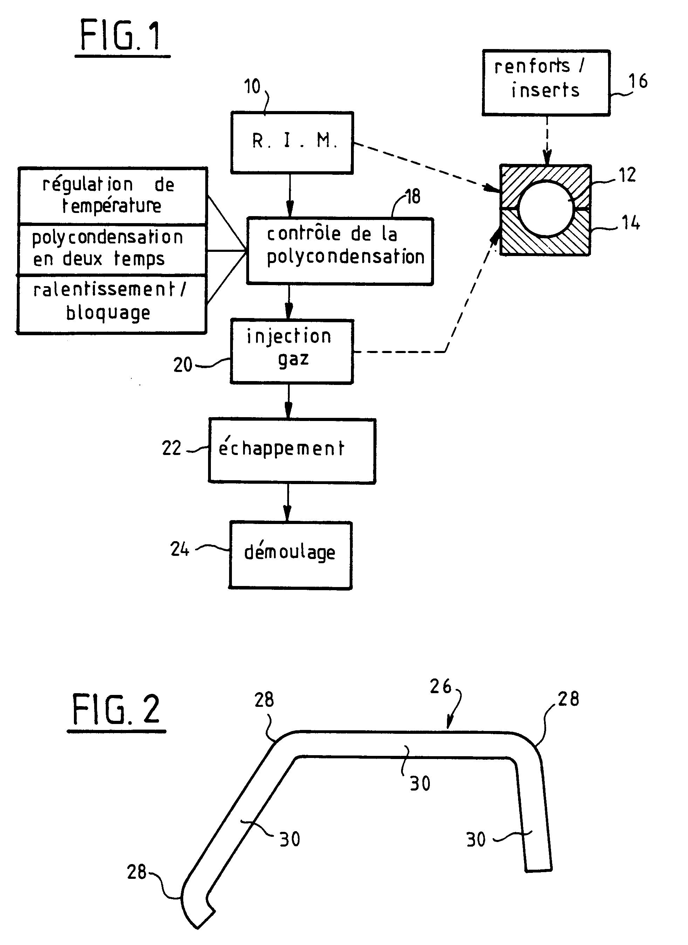

Comme représenté schématiquement en figure 1, le procédé selon l'invention comprend une première phase 10, qui consiste à injecter par le procédé R.I.M. une quantité déterminée de matière thermodurcissable dans un volume de moulage 12 à la forme et aux dimensions du produit à obtenir, définies dans un moule 14 qui peut être en deux parties par exemple.

Le procédé R.I.M. consiste à mélanger entre eux les composants de la matière thermodurcissable immédiatement avant l'injection de cette matière dans le volume de moulage 12, le mélange se faisant en général directement dans une tête d'injection associée au moule 14.

En fonction du type de pièce ou de produit à réaliser, il peut être nécessaire de positionner au préalable des renforts et/ou des inserts dans le volume de moulage 12. Les renforts ou inserts peuvent être en métal ou en matière plastique. On peut également utiliser des renforts de matière fibreuse, éventuellement tissés, en fonction des besoins et selon les types de pièces ou de produits à fabriquer.

Cette opération préalable de positionnement des renforts et/ou des inserts dans le moule est désignée par la référence 16 en figure 1.

Une autre opération du procédé selon l'invention, désignée par la référence 18, consiste à contrôler la cinétique de la réaction de polycondensation de la matière thermodurcissable injectée. Pour cela, divers moyens sont utilisables, isolément ou en combinaison :
- un ralentissement de la cinétique de polycondensation par une régulation appropriée de la température,
- une réalisation de la polycondensation en deux temps, le premier temps commençant par exemple dans la tête d'injection de la matière associée au moule 14, et le second temps dans le volume de moulage 12,
- un ralentissement ou un blocage, pendant un temps approprié, de cette réaction de polycondensation.

Les polycondensations des matières thermodurcissables sont réalisées, de façon bien connue maintenant de l'homme du métier, à chaud, et/ou sous pression, et/ou avec addition de catalyseurs, de durcisseurs, d'accélérateurs (ou d'inhibiteurs), de solvants réactifs, etc, en fonction des types et des natures des matières thermodurcissables. Les variations de viscosité de ces matières en fonction de la température sont connues, ainsi que celles de leurs temps de gélification et de durcissement. Les propriétés et modes d'action des catalyseurs, durcisseurs, accélérateurs, inhibiteurs et autres additifs sont également connues.

L'homme du métier est ainsi capable de déterminer, connaissant la matière thermodurcissable utilisée et les caractéristiques de la pièce à réaliser, les conditions de polycondensation de cette matière permettant d'obtenir le résultat recherché.

L'étape suivante du procédé selon l'invention, désignée par la référence 20, consiste à injecter une quantité déterminée de gaz sous une pression donnée à l'intérieur du volume de moulage 12, et plus précisément à l'intérieur de la masse de matière thermodurcissable injectée dans ce volume. On peut utiliser un gaz neutre tel que de l'azote, mais on peut également utiliser de l'air ou du dioxyde de carbone, en fonction du type de matière thermodurcissable utilisée.

La pression d'injection du gaz est calculée et déterminée de façon à ce que la matière thermodurcissable progresse à l'intérieur du volume de moulage et vienne recouvrir, de façon continue, toutes les surfaces délimitant ce volume de moulage. On comprend qu'une pression trop faible de gaz ne permettrait pas de déplacer suffisamment la matière, et qu'une pression trop importante du gaz risquerait de conduire à une répartition irrégulière de cette matière, pouvant même aller jusqu'à la formation de trous à travers la paroi de la pièce moulée.

L'injection de gaz a lieu aussi rapidement que possible après l'injection de la matière thermodurcissable dans le volume de moulage. De préférence, on injecte le gaz dans le volume de moulage au moyen du conduit d'injection de la matière thermodurcissable.

La polycondensation de la matière se produisant rapidement, on peut, au bout d'un bref laps de temps , mettre à l'échappement le volume interne de la pièce moulée, de façon à ce que la pression à l'intérieur de cette pièce soit sensiblement égale à la pression ambiante, cette étape étant désignée par la référence 22 en figure 1, puis on peut ensuite procéder au démoulage (étape 24) sans risque de voir la pièce moulée éclater ou se déformer.

On a représenté schématiquement en figure 2, à titre d'exemple, un conduit en matière thermodurcissable moulé selon l'invention.

Ce conduit, désigné par la référence 26, comprend trois coudes 28 plus ou moins prononcés raccordés par des parties sensiblement rectilignes 30 , quine sont pas forcément dans des plans communs. Grâce au fait que le conduit 26 est moulé en forme, il n'est pas écrasé ou aplati dans les coudes 28, de sorte que sa section interne de passage de fluide ne varie pas au niveau des coudes.

Le procédé selon l'invention est utilisable avec toutes les matières thermodurcissables dont on peut contrôler la cinétique de polycondensation de façon suffisante pour que l'injection du gaz sous pression dans la masse de matière injectée puisse jouer son rôle, c'est-à-dire répartir la matière sur les surfaces délimitant le volume de moulage.

Dans le cas où l'on souhaite que la pièce moulée ait un très bon aspect de surface, par exemple lorsqu'il s'agit d'une pièce de carrosserie devant avoir un aspect de classe A, l'invention prévoit de former dans le volume de moulage 12, préalablement à l'injection de la pièce, une épaisseur relativement uniforme de matière de revêtement sur les surfaces définissant le volume de moulage, et d'injecter ensuite la matière thermodurcissable.

De façon générale, le procédé selon l'invention est applicable à la réalisation de toutes pièces comportant des parties creuses ou tubulaires, réalisées en matières thermodurcissables, tels que des joints tubulaires d'étanchéité, des tubes ou conduits, des pièces d'équipement automobile, des pièces de carrosserie automobile, etc....

## Revendications

1. Procédé de fabrication de corps creux moulés en forme, par exemple de corps tubulaires non rectilignes, par injection de matière plastique et d'un gaz sous pression dans un volume de moulage (12), caractérisé en ce qu'il consiste à utiliser une matière thermodurcissable, à injecter une quantité prédéterminée de cette matière dans le volume de moulage par un procédé R.I.M., à injecter ensuite dans ce volume de moulage un gaz sous une pression déterminée, et à contrôler la cinétique de polycondensation de la matière injectée pour que cette matière déplacée par le gaz recouvre de façon continue les surfaces délimitant le volume de moulage avant que sa polycondensation ne s'y oppose, la cinétique de polycondensation étant contrôlée par détermination de la température et/ou de la pression de moulage, et/ou par addition à la matière injectée de catalyseurs, de durcisseurs, d'accélérateurs ou d'inhibiteurs.

2. Procédé selon la revendication 1, caractérisé en ce qu'il consiste à disposer au préalable des moyens de renfort et/ou des inserts dans le volume de moulage (12).

3. Procédé selon la revendication 1 ou 2, caractérisé en ce qu'il consiste également à former au préalable dans le volume de moulage (12), une épaisseur d'une matière de revêtement ayant un bon aspect de surface et qui est destinée à recouvrir la surface extérieure ou visible du corps creux précité.

4. Procédé selon l'une des revendications précédentes, caractérisé en ce qu'il consiste à mettre à l'échappement le volume interne du corps creux moulé, avant d'effectuer son démoulage.

5. Procédé selon l'une des revendications précédentes, caractérisé en ce qu'il consiste à ralentir la cinétique de polycondensation de la matière thermo-durcissable par régulation de la température d'injection.

6. Procédé selon l'une des revendications précédentes, caractérisé en ce qu'il consiste à contrôler la cinétique de polycondensation de la matière thermo-durcissable en faisant s'effectuer cette réaction en deux temps, l'un commençant par exemple dans la tête d'injection de la matière et l'autre après injection du gaz dans le volume de moulage.

7. Procédé selon l'une des revendications précédentes, caractérisé en ce qu'il consiste à contrôler la cinétique de polycondensation de la matière thermo-durcissable, par ralentissement ou blocage de cette réaction pendant un laps de temps déterminé.

8. Procédé selon l'une des revendications 1 à 7, caractérisé en ce qu'il est appliqué à la fabrication de joints tubulaires, de tubes ou de conduits mis en forme, utilisables en particulier dans le domaine automobile.

9. Procédé selon l'une des revendications 1 à 7, caractérisé en ce qu'il est appliqué à la fabrication de pièces creuses d'équipement ou de carrosserie automobile.

## Claims

1. A method of manufacturing hollow molded bodies, e.g. in the form of non-rectilinear tubular bodies, by injecting plastics material and a gas under pressure into a mold volume (12), the method being characterized in that it consists in using a thermosetting material, in injecting a predetermined quantity of said material into the mold volume by an R.I.M. method, then in injecting a gas under determined pressure into said mold volume, and in controlling the polycondensation reaction kinetics of the injected material so that said material as displaced by the gas covers in continuous manner the surfaces defining the mold volume before polycondensation thereof prevents this happening, the reaction kinetics of the polycondensation being controlled by determining the temperature and/or the molding pressure and/or by adding injected matter constituting a catalyst, a hardener, an accelerator, or an inhibitor.

2. A method according to claim 1, characterized in that it includes previously placing reinforcing means and/or inserts in the mold volume (12).

3. A method according to claim 1 or 2, characterized in that it also includes previously forming inside the mold volume (12) a thickness of lining material having good surface appearance and intended to cover the outside or visible surface of the above-mentioned hollow body.

4. A method according to any preceding claim, characterized in that it includes connecting the inside volume of the molded hollow body to an exhaust prior to performing unmolding thereof.

5. A method according to any preceding claim, characterized in that it includes slowing down the polycondensation reaction kinetics of the thermosetting material by regulating the injection temperature.

6. A method according to any preceding claim, characterized in that it includes controlling the polycondensation reaction kinetics of the thermosetting material by causing said reaction to take place in two stages, e.g. one beginning in the material injection head and the other after gas has been injected into the mold volume.

7. A method according to any preceding claim, characterized in that it includes controlling the polycondensation reaction kinetics of the thermosetting material by slowing or preventing said reaction during a determined lapse of time.

8. A method according to any one of claims 1 to 7, characterized in that it is applied to manufacturing tubular gaskets, tubes, or shaped ducts, suitable for use in particular in the automotive field.

9. A method according to any one of claims 1 to 7, characterized in that is applied to manufacturing hollow equipment or bodywork parts for automotive vehicles.

## Patentansprüche

1. Verfahren zum Herstellen von geformten Hohlkörpern, beispielsweise nichtgerade Rohrkörper, durch Injizieren eines unter Druck stehenden Kunststoffmaterials und eines Gases in ein Formvolumen (12), **dadurch gekennzeichnet, daß** es aufweist: die Verwendung eines thermoplastischen Materials, das Injizieren einer vorbestimmten Menge dieses Materials in das Formvolumen mittels eines R.I.M.-Verfahrens, das nachfolgende Injizieren eines unter einem vorbestimmten Druck stehenden Gases in dieses Formvolumen und das Steuern der Polykondensationskinetik des injizierten Materials, damit jenes, durch das Gas verdrängte Material vor Eintritt der Polykondensation und ohne diese zu behindern in kontinuierlicher Weise die das Formvolumen begrenzend Oberflächen bedeckt, wobei die Polykondensationskinetik durch Bestimmen der Temperatur und/oder des Formdruckes und/oder durch Addition eines Katalysators, eines Härters, eines Beschleunigers oder eines Inhibitors zu dem injizierten Material gesteuert wird.

2. Verfahren nach Anspruch 1, **dadurch gekennzeichnet, daß** in dem Formvolumen (12) zuvor Mittel zur Verstärkung und/oder Einsätze angeordnet werden.

3. Verfahren nach Anspruch 1 oder 2, **dadurch gekennzeichnet, daß** in dem Fomvolumen (12) zuvor weiters eine Schicht eines Überzugmaterials mit einer hohen Oberflächengüte hergestellt wird, welche zum Abdecken der äußeren oder sichtbaren Oberfläche des Hohlkörpers vorgesehen ist.

4. Verfahren nach einem der vorigen Ansprüche, **dadurch gekennzeichnet, daß** vor seinem Entformen das Innenvolumen des Hohlkörpers entleert wird.

5. Verfahren nach einem der vorigen Ansprüche, **dadurch gekennzeichnet, daß** die Polykondensationskinetik des thermoplastischen Materials durch Regalieren der Injektionstemperatur verlangsamt wird.

6. Verfahren nach einem der vorigen Ansprüche, **dadurch gekennzeichnet, daß** die Polykondensationskinetik des thermoplastischen Materials durch das Ausführen dieser Reaktion in zwei Schritten gesteuert wird, wobei der eine beispielsweise in dem Injektionskopf für das Material und der andere nach dem Injizieren des Gases in dem Formvolumen abläuft.

7. Verfahren nach einem der vorigen Ansprüche, **dadurch gekennzeichnet, daß** die Polykondensationskinetik des thermoplastischen Materials durch Verlangsamen oder Blockieren dieser Reaktion während einer vorbestimmten Zeitdauer gesteuert wird.

8. Verfahren nach einem der Ansprüche 1 bis 7, **dadurch gekennzeichnet, daß** es zur Herstellung von Rohrverbindungen, Rohren oder Leitungen herangezogen wird, die insbesondere im Automobilbau verwendet werden.

9. Verfahren nach einem der Ansprüche 1 bis 7, **dadurch gekennzeichnet, daß** es zur Herstellung von Hohlteilen zum Ausstatten von Automobilen oder für deren Karosserie verwendet wird.
